Europäisches Patentamt

European Patent Office

Office européen des brevets

(19)

(11) Numéro de publication: **0 266 260**
**B1**

(12) **FASCICULE DE BREVET EUROPEEN**

(45) Date de publication du fascicule du brevet:
**11.04.90**

(21) Numéro de dépôt: **87402322.9**

(22) Date de dépôt: **16.10.87**

(51) Int. Cl.⁴: **F16D 55/32,** F16D 55/224,
F16D 65/12, F16D 3/06

(54) **Frein à disques multiples.**

(30) Priorité: **29.10.86 FR 8615045**

(43) Date de publication de la demande:
**04.05.88 Bulletin 88/18**

(45) Mention de la délivrance du brevet:
**11.04.90 Bulletin 90/15**

(84) Etats contractants désignés:
**DE ES GB IT**

(56) Documents cités:
**EP-A- 0 130 883**
**EP-A- 0 143 709**
**DE-B- 1 205 345**
**FR-A- 1 374 262**
**FR-A- 2 138 312**
**GB-A- 1 087 988**

(73) Titulaire: **BENDIX France Société Anonyme dite:,
126, rue de Stalingrad, F-93700 Drancy(FR)**

(72) Inventeur: **Meynier, Guy, 58, rue de Reins,
F-93600 Aulnay S/Bois(FR)**

(74) Mandataire: **Luziau, Roland et al, Division Technique
Service Brevets Bendix Europe 126, rue de Stalingrad,
F-93700 Drancy(FR)**

ACTORUM AG

## Description

L'invention se rapport à un frein à disques multiples comprenant un premier disque rotatif solidaire d'un moyeu qui est relié à un organe tournant à freiner et au moins un second disque rotatif susceptible de coulisser axialement par rapport au moyeu et au premier disque tout en étant rendu solidaire en rotation du premier disque, les axes du moyeu et desdits disques étant confondus, ainsi qu'un ensemble de patins de friction comportant des garnitures de friction susceptibles d'être appliquées sur les faces des disques par un dispositif d'actionnement.

On connaît déjà par le document EP-A-130 883 un frein à disques multiples de ce type dans lequel le second disque est porté par un manchon cannelé intérieurement qui peut coulisser sur une partie du moyeu cannelée extérieurement, l'engrènement mutuel de ces cannelures assurant l'entraînement en rotation du second disque par le moyeu. Afin de réduire les effets du jeu existant inévitablement entre les cannelures du manchon et du moyeu et pouvant entraîner un claquement causé par la brusque venue en contact des flancs des cannelures qui travaillent durant le freinage pour transmettre le couple de ralentissement du second disque au moyeu, on a proposé de prévoir un agencement développant entre le manchon et le moyeu un couple qui les sollicite autour de leur axe commun dans un sens tel qu'il tende à mettre en appui mutuel les flancs des cannelures du moyeu et du manchon par lesquels se transmet l'effort de freinage au moyeu. L'agencement créateur de couple comprend au moins un élément élastique, par exemple un bloc de caoutchouc mis en expansion par une cheville interne à l'intérieur d'un logement.

Une telle mise en précontrainte des cannelures a permis d'éviter les claquements entre flancs au moment de l'application du frein et en cas d'inversion du sens de freinage. Par contre, lors d'essais de longue durée, il s'est avéré que soit l'élément élastique perdait peu à peu son élasticité, soit certaines des cannelures tendaient à se gripper par suite d'un trop long séjour sous vibrations dans la même position et le second disque rotatif ne coulissait alors plus de façon vraiment libre par rapport au premier. Ces défauts se manifestaient, après une longue durée de service, par des usures anormales de certaines pistes de friction des disques et de certains des patins de friction et par des variations du couple de freinage des disques.

L'un des buts de la présente invention est précisément de proposer un frein à disques multiples dont le second disque présente une mobilité par rapport au premier disque et au moyeu qui est à la fois plus importante et moins sensible à l'échauffement et qui se maintient mieux dans le temps car elle fait appel à des sabots relativement flottants et montés avec jeu dans un logement. Un autre but de l'invention est d'obtenir cette bonne mobilité du second disque avec des moyens compacts et aisés à mettre en oeuvre pour une production économique en grande série.

A cet effet, selon l'invention, la liaison entre le second disque et le moyeu est réalisée par l'intermédiaire d'au moins deux sabots coulissant axialement, régulièrement répartis sur un cercle et logés chacun dans un logement axial de section transversale complémentaire de celle du sabot. Les sabots sont solidaires de la périphérie intérieure du second disque et/ou de la périphérie extérieure d'une partie de flasque, elle-même solidaire du moyeu et les logements axiaux sont prévus réciproquement à la périphérie extérieure de la partie de flasque solidaire du moyeu et/ou à la périphérie intérieure du second disque et présentent, d'une part, des flancs latéraux de butée avec un léger jeu pour la transmission au moyeu du couple de retenue du second disque et, d'autre part, au moins un moyen de retenue radiale des sabots. Le moyen de retenue radiale est constitué, de préférence, par un bord du flanc latéral, faisant saillie à l'intérieur du logement et qui se referme sur le sabot correspondant pour le retenir au moins dans l'une de ses directions radiales de déplacement.

Selon un autre mode de réalisation de l'invention, chaque sabot présente au moins une extrémité arrondie convexe qui coopère avec un flanc latéral arrondi concave correspondant du logement, le bord extérieur de ce flanc latéral concave se refermant sur l'extrémité convexe du sabot pour emprisonner radialement celui-ci dans le logement avec un jeu tangentiel lui autorisant de petits déplacements radiaux et en rotation et un coulissement axial pour placer les pistes de friction du second disque au contact des garnitures de friction correspondantes.

Selon encore un autre mode de réalisation de l'invention tendant à supprimer les claquements qui se produisent au moment de l'engagement du freinage, au moins un ressort de rattrapage de jeu est interposé entre le deuxième disque et le moyeu et/ou entre le sabot coulissant et son logement.

La partie de flasque solidaire du moyeu comporte avantageusement des pattes périphériques extérieures sur lesquelles sont fixées latéralement des pattes périphériques intérieures solidaires du premier disque, au moins deux logements ouverts sur l'extérieur étant ménagés entre les pattes périphériques extérieures de la partie de flasque pour recevoir chacun un sabot coulissant solidaire du second disque.

Selon un mode de réalisation réduisant considérablement les frais de fabrication des disques, le premier disque et le second disque sont identiques et interchangeables au montage et présentent à leur périphérie intérieure des pattes de fixation régulièrement réparties et destinées à être fixées, par exemple par des rivets, sur les pattes périphériques du flasque de liaison ou respectivement sur la partie centrale d'un sabot.

Chaque sabot coulissant présente, de préférence, une partie centrale de plus faible épaisseur apte à être fixée latéralement à au moins une patte périphérique intérieure d'un disque de frein et des parties périphériques de forme générale cylindrique, qui sont reliées à la partie centrale et munies à leurs deux extrémités, du côté des extrémités en creux des logements qui les recoivent, d'au moins une portée faisant saillie par rapport à la forme générale cylindrique et destinée à venir en appui sur ladite extrémité en creux du logement.

Selon un mode de réalisation particulier du frein à disques multiples selon l'invention, au moins un ressort de rattrapage de jeu est interposé entre une surface d'appui prévue sur la périphérie extérieure du flasque de liaison et une surface d'appui conjuguée ménagée sur la périphérie intérieure du deuxième disque. Au moins l'une des surfaces d'appui prévue sur le flasque de liaison ou sur la périphérie intérieure du deuxième disque est inclinée par rapport à une direction radiale, de manière à produire une réaction à composante radiale et à composante tangentielle. Le ressort de rattrapage est avantageusement un ressort à lame replié en U et muni de deux oreilles de maintien sensiblement hémi-cylindriques, rabattues perpendiculairement à la lame du ressort et logées en service dans des logements sensiblement hémicylindriques ménagés sur le côté de l'une des surfaces d'appui de la partie de flasque.

Selon un autre mode de réalisation comportant des ressorts de suppression des claquements à l'engagement du frein, le sabot présente, à sa partie tournée vers le fond du logement, une surface d'appui et de guidage de ressort et un logement de ressort en creux dans lequel est disposé un ressort de rattrapage de jeu du sabot et qui est interposé entre ladite surface d'appui et de guidage du ressort et une surface de butée de ressort constituée par la surface de fond du logement.

D'autres buts, avantages et caractéristiques apparaîtront à la lecture de la description de divers modes de réalisation de l'invention, faite à titre non limitatif et en regard du dessin annexé, où:

- la figure 1 représente en coupe axiale par un plan passant par la ligne I-I à la figure 2, un premier mode de réalisation du frein à disques multiples selon l'invention;
- la figure 2 représente une vue en bout avec arrachements des disques de frein et du flasque de liaison selon le mode de réalisation représenté à la figure 1;
- la figure 3 est une vue en plan à plus grande échelle de l'un des sabots de liaison du second disque avec le flasque du moyeu;
- la figure 4 est une vue fragmentaire à plus grande échelle encore représentant la zone d'un ressort de rattrapage de jeu correspondant à la figure 2;
- la figure 5 est une vue en bout complète et sensiblement à la même échelle qu'à la figure 2 d'un autre mode de réalisation des disques de frein reliés à un flasque de moyeu;
- la figure 6 est une vue fragmentaire à plus grande échelle de la zone des ressorts de rattrapage de jeu à la figure 5;
- la figure 7 représente en vue en bout le flasque de liaison du moyeu avec le premier disque et avec les sabots coulissants portés par le second disque, dans le mode de réalisation de la figure 5.

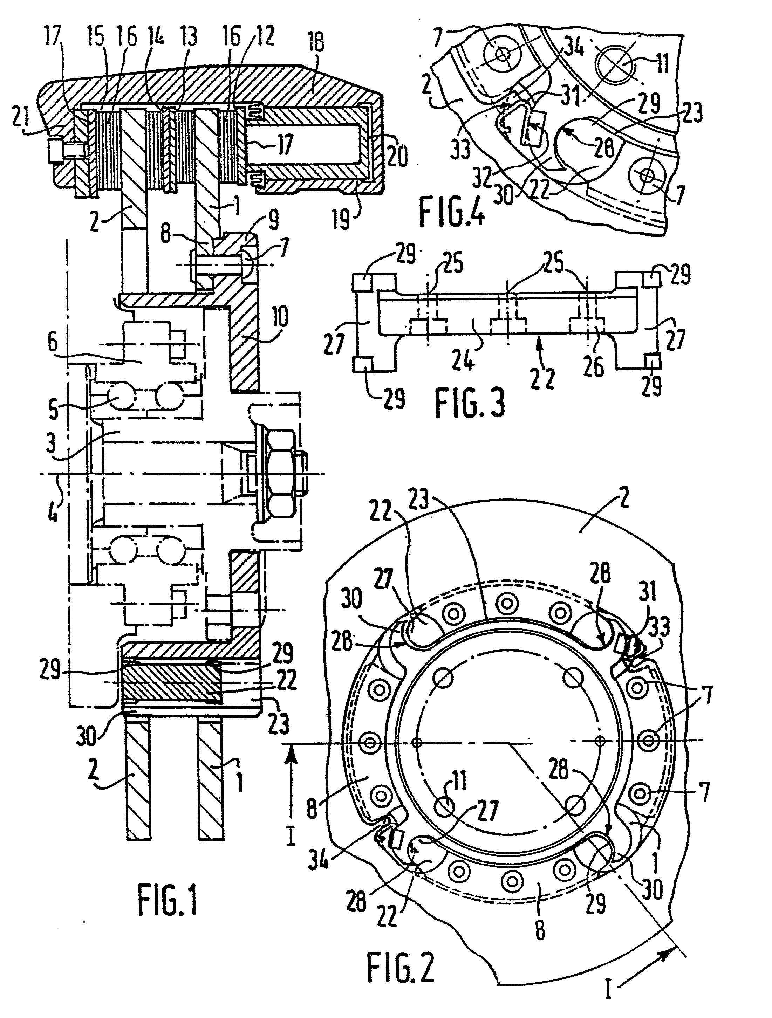

Le frein à disques multiples représenté sur la figure 1 comporte un premier disque rotatif 1 et un second disque rotatif 2 solidaires d'un moyeu 3 dont l'axe 4 coïncide avec ceux des disques 1 et 2. Le moyeu 3, comme les autres pièces ne faisant pas partie du frein proprement dit, est représenté en traits alternés et tourne sur un roulement à billes 5 monté à l'intérieur d'une couronne fixe 6. Le disque 1 est rendu solidaire du moyeu 3 par une couronne de rivets 7 qui relie des parties intérieures en forme de pattes 8 de ce disque et des pattes extérieures conjuguées 9 d'un flasque intermédiaire 10 rendu solidaire du moyeu 3 par des vis non représentées à la figure 1 (voir les alésages 11 à la figure 2). Le disque 1 est ainsi fixe dans la direction de l'axe 4 tandis que le disque 2 peut se déplacer suivant cette direction grâce à des moyens de coulissement qui seront décrits par la suite.

Chaque disque de frein 1 ou 2 coopère avec une paire de patins de friction 12 et 13 ou 14 et 15, disposés de part et d'autre du disque de frein 1 ou 2 correspondant et susceptibles d'être appliqués contre les faces latérales de celui-ci. Chacun des patins de friction 12, 13, 14 et 15 comprend une garniture de friction 16 et une plaque porte-garniture 17, chaque garniture 16 coopérant avec la face adjacente (du disque 1 ou 2) correspondante qui constitue une piste de friction.

Un étrier 18 est fixé par des liaisons non représentées à la couronne fixe 6 et est disposé par dessus les disques de frein 1, 2 et leurs patins de friction 12, 13, 14, 15, de façon à coiffer l'ensemble disques-patins. Dans la partie intérieure 19 de l'étrier 18, est prévu un moteur de commande tel qu'un vérin hydraulique dont le piston 20 est susceptible d'agir sur la plaque porte-garniture 17 du patin intérieur 12, et par réaction et grâce au nez échancré 21 de l'étrier, sur la plaque porte-garniture 17 du patin extérieur 15, de manière à commander le serrage de l'ensemble disquespatins suivant la direction de l'axe 4 et à faire ainsi naître la friction de freinage entre chaque garniture 16 et la piste de friction du disque conjugué.

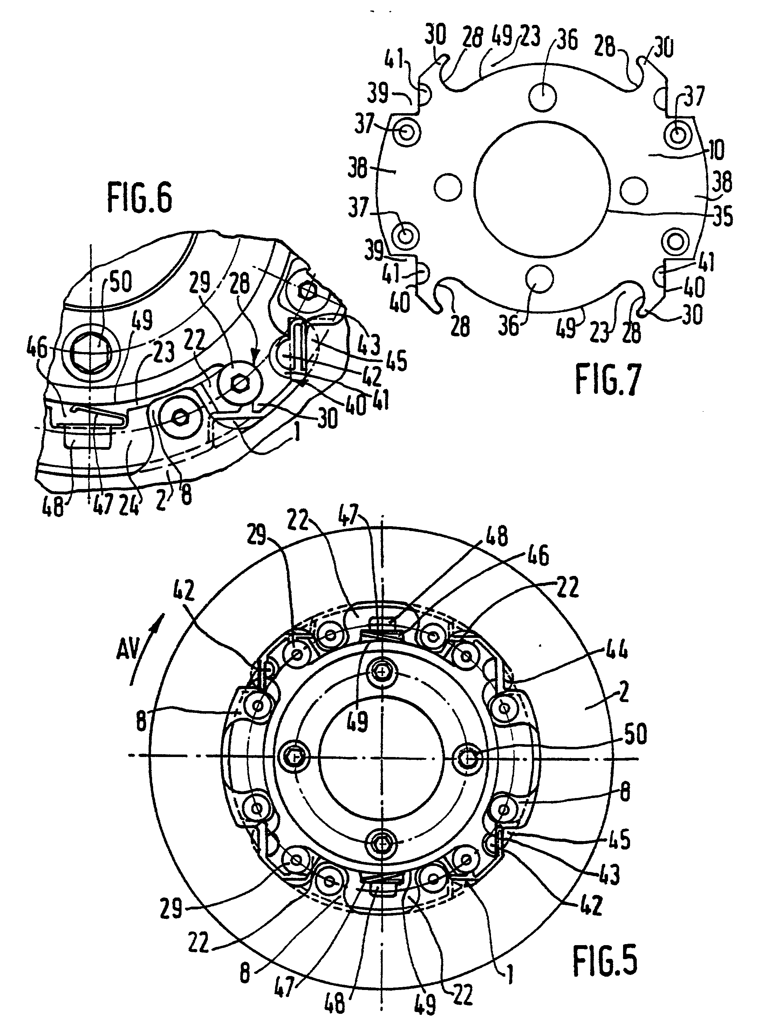

Cette action peut s'accompagner d'un déplacement du second disque 2, parallèlement à l'axe 4, par rapport au moyeu 3. Pour cela, alors que le premier disque 1 est relié rigidement au flasque intermédiaire 10 par les rivets 7, la liaison entre le second disque 2 et le flasque intermédiaire 10 solidaire du moyeu 3, est réalisée par l'intermédiaire de deux sabots 22 qui coulissent axialement dans un logement axial 23 de section transversale complémentaire de celle du sabot (voir également la figure 7). Les deux sabots 22 sont disposés symétriquement par rapport au centre du flasque intermédiaire 10 et donc du moyeu 3 et sont ainsi régulièrement répartis à la périphérie de ce flasque en présentant une forme générale arquée avec des extrémités convexes arrondies. Sur la vue en plan de la figure 3, on voit que le sabot 22 présente une partie centrale plus mince 24 et dans laquelle sont ménagés trois alésages 25 munis d'un lamage 26 servant à noyer la tête du rivet de fixation (non représenté), en principe identique au rivet 7 de fixation du disque 1 sur le flasque 10. La partie centrale 24 est reliée à des extrémités 27 de forme générale cylindrique dont l'axe du cylindre est parallèle à l'axe 4 du moyeu. Les extrémités 27 présentent ici du côté extérieur, c'est-à-dire en service du côté des flancs 28 du logement 23, des portées en saillies 29 destinées à venir au contact de ces flancs 28. Ces portées en saillies peuvent être rapportées par tout moyen tel que soudure, fixation par vis d'un embout cylindrique, ou bien venir dans la masse du sabot par fonderie ou forgeage.

On voit sur les figures 2 et 4 à 7 que les flancs latéraux 28 des logements 23 présentent en section transversale une forme concave arrondie et de diamètre légèrement supérieur à celui des extrémités 27, 29 des sabots avec, à l'extrémité du logement, une sorte de bord ou d'ergot 30 faisant saillie vers l'intérieur du logement 23 et qui se referme sur l'extrémité 27, 29 du sabot pour retenir radialement celui-ci. La fonction de retenue radiale de l'extrémité 30 à l'égard du sabot 22 est bien mise en évidence à la partie inférieure de la figure 1 où l'on voit que le logement 23 constitue en fait une rainure axiale qui guide le sabot 22 au cours du déplacement axial du second disque 2 par rapport au moyeu 3.

Le sabot 22 est monté avec un léger jeu radial et surtout tangentiel à l'intérieur de son logement 23 afin de permettre la libre dilatation du sabot au cours de l'échauffement du second disque 2 et de provoquer un léger mouvement de battement à chaque nouvelle application des freins, de manière à décrocher les particules de salissures qui pourraient s'accumuler au cours du service des freins. Afin d'éviter un claquement des sabots 22 au contact latéral du logement 23, des ressorts de rattrapage de jeu 31, en forme de lame pliée en V sont intercalés entre le dos incliné 32 (voir la figure 4) des ergots en saillie 30 et une surface d'appui 33 d'un ergot radial intérieur 34 du second disque 2.

On voit sur les figures 2 et 5 que les premier et second disques 1, 2 sont identiques, chacun possédant des pattes intérieures 8 qui, dans le cas du disque 1, sont fixées directement par des rivets 7 sur le flasque 10 et, dans le cas du disque 2, sont fixées par des rivets identiques sur les sabots 22. Les deux disques sont munis d'ergots 34 qui ne servent de butée de ressort que pour le second disque 2. Dans le mode de réalisation de l'invention représenté, il n'est donc pas nécessaire de prévoir deux types de disques 1 et 2.

Sur le type de flasque de liaison représenté à la figure 7, on reconnaît un alésage central 35 de réception du moyeu 3, entouré d'une couronne de trous 36 de fixation sur ce moyeu 3. Des trous lamés 37 sont prévus sur des oreilles 38 ménagées en saillie entre les logements 23, pour recevoir des vis à tête fraisée de fixation du premier disque 1. Le flasque de liaison représenté à la figure 7 correspond au mode de réalisation représenté à la figure 5 qui ne comporte que deux vis de fixation du sabot. Dans ce mode de réalisation, des ouvertures de logement de ressort 39 sont ménagées (ou fraisées) entre l'ergot 30 de l'extrémité 28 du logement 23 et les oreilles 38. Sur l'une des faces 40 de ce logement 39, débouchent des logements (ou demi-lamages) 41 pour les oreilles rabattues 42 (voir les figures 5 et 6) d'un ressort de rattrapage de jeu 43 interposé entre une surface inclinée de butée 44 ménagée sur un ergot intérieur 45 du disque 2 et la face 40.

Sur le mode de réalisation représenté sur les figures 5 à 7, les sabots 22 comportent un creux central 46 formant logement pour un ressort à lame 47 replié en U et qui présente des oreilles 48 rabattues autour d'une surface de guidage du sabot 22. L'une des branches en U du ressort 47 est en appui sur le fond du creux central 46 tandis que l'autre branche est en appui sur le fond 49 du logement 23. Des vis de fixation 50 du flasque de liaison 10 sur le moyeu 3 passent à travers les trous 36 et sont représentées en bout à la figure 5.

Le fonctionnement du frein à disques multiples qui vient d'être décrit va maintenant être explicité. Lorsque l'on procède à un serrage des freins, le piston 20 repousse la plaque 17 et la garniture 16 correspondante au contact de la première piste de friction du premier disque 1 et la pression de freinage régnant dans la partie intérieure 19 tire l'étrier 18 pour appliquer le nez 21 au contact de la plaque 17 du patin extérieur 15, de façon à appliquer sa garniture de frein 16 au contact de l'une des pistes de friction du second disque 2. Celui-ci, sous la pression de la garniture de friction 16 du patin, coulisse axialement par rapport au flasque intermédiaire 10 en entraînant les sabots 22 en translation dans leurs logements correspondants 23, jusqu'à ce que toutes les garnitures de friction 16 soient en contact avec les pistes de friction des disques 1 et 2.

A l'instant de l'application des garnitures de friction 16 sur les deux pistes de friction du second disque 2, les sabots 22 peuvent se déplacer axialement dans leurs logements 23 car le couple de freinage n'est pas encore appliqué au second disque 2 et l'effort tangentiel appliqué par les extrémités convexes 27 des sabots 22 sur les extrémités concaves 28 des logements 23 est suffisamment faible pour autoriser un glissement du sabot 22 dans son logement, même sans lubrification des surfaces en contact. Dès que le couple de freinage apparaît en retenue sur le second disque 2, l'effort tangentiel exercé sur les sabots 22 permet à ceux-ci d'assurer selon des génératrices deux lignes de contact élargies entre les deux surfaces cylindriques des portées 29 et de l'extrémité concave 28 du logement 23.

Après le desserrage des freins, un léger déplacement tangentiel des sabots 22 se produit qui tend à repousser ou à faire décrocher les salissures qui auraient pu se loger dans les interstices entre le sabot 22 et son logement 23. Si le couple de freinage est appliqué dans le sens opposé au sens habituel (repéré AV à la figure 5), par exemple en marche arrière dans un véhicule automobile, les sabots 22 se déplacent tangentiellement en écrasant légèrement les ressorts intercalaires 31 ou 43 de rattrapage de jeu tangentiel et viennent en appui par leur portée 29 sur l'extrémité concave 28 du logement 23 qui est opposée à celle qui sert d'appui dans le sens préférentiel.

Les surfaces de guidage et de coulissement constituées par les logements 23 et les sabots 22, forment des accouplements tangentiels aptes à transmettre des couples importants et peu sensibles à l'échauffement différentiel. Cet échauffement différentiel peut se manifester dans le fait que les sabots 22 sont échauffés au cours du freinage à partir de leur zone de contact avec le second disque 2 tandis que le flasque intermédiaire 10 est relativement froid, ce qui tend à produire un basculement et un vrillage des sabots 22. Le portage correct des portées 29 des extrémités convexes 27 des sabots 22 sur les extrémités concaves 28 des logements 23 est toujours assuré malgré ce vrillage et ce basculement, car le portage des sabots tend à s'étaler autour de deux courtes lignes de contact concaves-convexes entre deux cylindres.

On notera qu'il est possible de prévoir les logements 23 dans une couronne intérieure qui serait rapportée à l'intérieur du second disque 2 ou ferait partie intégrante de ce second disque, les sabots 22 étant alors rendus solidaires du flasque intermédiaire 10. Il est également possible de combiner ces deux solutions en utilisant à la fois des sabots solidaires du second disque 2 et d'autres sabots solidaires du flasques intermédiaire 10, tous ces sabots coopérants avec des logements correspondants, convenablement prévus sur le flasque intermédiaire 10 et le second disque 2.

Bien que le mode d'accouplement à grand mobilité axiale et à forte capacité de transmission de couple qui vient d'être décrit soit apte à fonctionner longtemps sans protection particulière et en supportant des à-coups thermiques, il est possible, pour améliorer la mobilité axiale du second disque 2 par rapport au moyeu 3, de fermer par des membranes annulaires souples et étanches, la zone d'accouplement des sabots 22 et du flasque intermédiaire 10 et de remplir de graisse, de préférence résistant à l'échauffement, par exemple au silicone, l'espace fermé ainsi délimité.

Bien entendu, la présente invention n'est pas limitée aux modes de réalisation décrits et représentés et elle est susceptible de nombreuses variantes accessibles à l'homme de l'art, sans que l'on ne s'écarte de l'esprit de l'invention.

## Revendications

1. Frein à disques multiples comprenant un premier disque rotatif solidaire d'un moyeu qui est relié à un organe tournant à freiner et au moins un second disque rotatif susceptible de coulisser axialement par rapport au moyeu et au premier disque tout en étant rendu solidaire en rotation du premier disque, les axes du moyeu et desdits disques étant confondus, ainsi qu'un ensemble de patins de friction comportant des garnitures de friction susceptibles d'être appliquées sur les faces des disques par un dispositif d'actionnement, caractérisé en ce que la liaison entre le second disque (2) et le moyeu (3) est réalisée par l'intermédiaire d'au moins deux sabots (22) coulissant axialement, régulièrement répartis sur un cercle et logés chacun dans un logement axial (23) de section transversale complémentaire de celle du sabot, en ce que les sabots (22) sont solidaires de la périphérie intérieure du second disque (2) et/ou de la périphérie extérieure d'une partie de flasque (10), elle-même solidaire du moyeu (3) et en ce que les logements axiaux (23) sont prévus réciproquement à la périphérie extérieure de la partie de flasque (10) solidaire du moyeu et/ou à la périphérie intérieure du second disque (2).

2. Frein à disques multiples selon la revendication 1, caractérisé en ce que les logements axiaux (23) présentent d'une part, des flancs latéraux (28) de butée pour la transmission au moyeu (3) du couple de retenue du second disque (2) et, d'autre part, au moins un moyen (30) de retenue radiale des sabots.

3. Frein à disques multiples selon la revendication 2, caractérisé en ce que le moyen de retenue radiale est constitué par un bord (30) du flanc latéral (28), faisant saillie à l'intérieur du logement et qui se referme sur le sabot correspondant (22) pour le retenir au moins dans l'une de ses directions radiales de déplacement.

4. Frein à disques multiples selon l'une des revendications 2 ou 3, caractérisé en ce que chaque sabot (22) présente au moins une extrémité arrondie convexe (27, 29) qui coopère avec un flanc latéral arrondi concave correspondant (28) du logement (23), le bord extérieur (30) de ce flanc latéral concave (28) se refermant sur l'extrémité convexe (27) du sabot (22) pour emprisonner radialement celui-ci dans le logement (23) avec un jeu tangentiel lui autorisant de petits déplacements radiaux et en rotation, et un coulissement axial pour placer les pistes de friction du second disque (2) au contact des garnitures de friction (16) correspondantes.

5. Frein à disques multiples selon l'une des revendications 1 à 4, caractérisé en ce qu'au moins un ressort de rattrapage de jeu (31, 43, 47) est interposé entre le deuxième disque (2) et le moyeu (3) et/ou entre un sabot coulissant (22) et son logement (23).

6. Frein à disques multiples selon l'une des revendications 1 à 5, caractérisé en ce que la partie de flasque (10) solidaire du moyeu (3) comporte des pattes périphériques extérieures (9,38) sur lesquelles sont fixées latéralement des pattes périphériques intérieures (8) solidaires du premier disque (1), au moins deux logements (23) ouverts sur l'extérieur étant ménagés entre les pattes périphériques extérieures (38) de la partie de flasque (10) pour recevoir chacun un sabot coulissant (22) solidaire du second disque (2)

7. Frein à disques multiples selon la revendication 6, caractérisé en ce que le premier et le second disques (1, 2) sont identiques et interchangeables au montage et présentent à leur périphérie intérieure des pattes de fixation (8) régulièrement réparties et destinées à être fixées, par exemple par des rivets (7), sur les pattes périphériques (9,38) du flasque de liaison (10) ou respectivement sur la partie centrale (24) d'un sabot (22).

8. Frein à disques multiples selon la revendication 7, caractérisé en ce que chaque sabot coulissant (22) présente une partie centrale (24) de plus faible épaisseur apte à être fixée latéralement à au moins une patte périphérique intérieure (8) d'un disque de frein (1, 2) et des parties périphériques (27) de forme générale cylindrique qui sont reliées à la partie centrale (24) et munies à leurs deux extrémités, du côté des extrémités en creux (28) des logements (23) qui les reçoivent, d'au moins une portée (29) faisant saillie par rapport à la forme générale cylindrique et destinée à venir en appui sur ladite extrémité en creux (28) du logement (23).

9. Frein à disques multiples selon l'une des revendications 1 à 8, caractérisé en ce qu'au moins un ressort de rattrapage de jeu (31, 43) est interposé entre une surface d'appui (32) prévue sur la périphérie extérieure de la partie de flasque de liaison (100 et une surface d'appui conjuguée (33) ménagée sur la périphérie intérieure du deuxième disque (2).

10. Frein à disques multiples selon la revendication 9, caractérisé en ce qu'au moins l'une des surfaces d'appui (32,40; 33,44) prévue sur la partie de flasque de liaison (10) ou sur la périphérie intérieure du deuxième disque (2), est inclinée par rapport à une direction radiale, de manière à produire une réaction à composante radiale et à composante tangentielle.

11. Frein à disques multiples selon l'une des revendications 9 ou 10, caractérisé en ce que le ressort de rattrapage (31, 43) est un ressort à lame replié en U et muni de deux oreilles de maintien (42) sensiblement hémicylindriques, rabattues perpendiculairement à la lame du ressort et logées en service dans des logements (41) sensiblement hémicylindriques ménagés sur le côté de l'une des surfaces d'appui (40) de la partie de flasque (10).

12. Frein à disques multiples selon l'une des revendications 5 à 11, caractérisé en ce que le sabot (22) présenta à sa partie tournée vers le fond (49) du logement (23), une surface d'appui et de guidage de ressort et un logement de ressort en creux (46) dans lequel est disposé un ressort (47) de rattrapage du jeu du sabot et qui est interposé entre ladite surface d'appui et de guidage (oreilles 48) du ressort et une surface de butée de ressort constituée par la surface de fond (49) du logement (23).

**Patentansprüche**

1. Mehrscheibenbremse mit einer ersten sich drehenden Scheibe, die mit einer Nabe zusammenhängt, die mit einem zu bremsenden Drehelement verbunden ist, und mindestens einer zweiten sich drehenden Scheibe, die sich in bezug auf die Nabe und die erste Scheibe axial bewegen kann, indem sie gleichzeitig mit der ersten Scheibe in Rotation zusammenhängt, wobei die Achsen der Nabe und dieser Scheiben vereinigt sind, sowie einem Satz Reibklötze mit Reibungsbelägen, die mittels einer Betätigungsvorrichtung auf die Flächen der Scheiben angepreßt werden können, dadurch gekennzeichnet, daß die Verbindung zwischen der zweiten Scheibe (2) und der Nabe (3) durch mindestens zwei axial gleitende Bremsbacken (22) erfolgt, die gleichmäßig auf einen Kreis verteilt und jede in einem Axiallager (23) mit einem Querschnitt gelagert sind, der den der Bremsbacke ergänzt, dadurch daß die Bremsbacken (22) mit dem Innenumfang der zweiten Scheibe (2) und/oder dem Außenumfang eines Flanschteils (10) zusammenhängen, das seinerseits mit der Nabe (3) zusammenhängt, und dadurch, daß die Axiallager (23) gegenseitig auf dem Außenumfang des mit der Nabe zusammenhängenden Flanschteiles (10) und/oder auf dem Innenumfang der zweiten Scheibe (2) vorgesehen sind.

2. Mehrscheibenbremse nach Anspruch 1, dadurch gekennzeichnet, daß die Axiallager (23) einerseits seitliche Anschlagflanken (28) für die Übertragung des Rückhaltemoments der zweiten Scheibe (2) auf die Nabe (3) und andererseits mindestens ein Mittel (30) für den radialen Rückhalt der Bremsbacken aufweisen.

3. Mehrscheibenbremse nach Anspruch 2, dadurch gekennzeichnet, daß das Mittel für radialen Rückhalt durch einen Rand (30) der Seitenflanke (28) gebildet wird, der in das Lagerinnere hineinragt und sich über der entsprechenden Bremsbacke (22) schließt, um sie mindestens in einer ihrer radialen Verschiebungsrichtungen zurückzuhalten.

4. Mehrscheibenbremse nach einem der Ansprüche 2 oder 3, dadurch gekennzeichnet, daß jede Bremsbacke (22) mindestens ein konvexes abgerundetes Ende (27, 29) aufweist, das mit einer entsprechenden konkaven abgerundeten Seitenflanke (28) des Lagers (23) zusammenwirkt, wobei sich der Außenrand (30) dieser konkaven Seitenflanke (28) über dem konvexen Ende (27) der Bremsbacke (22) schließt, um diese radial im Lager (23) mit einem Tangentialspiel einzuschliessen, das ihm kleine radiale und in Rotation erfolgende Verschiebungen erlaubt, und ein axiales Gleiten, um die Reibungsspuren der zweiten Scheibe (2) mit den entsprechenden Reibungsbelägen (16) in Kontakt zu bringen.

5. Mehrscheibenbremse nach einem der Ansprüche 1 bis 4, dadurch gekennzeichnet, daß mindestens eine Spielnachstellfeder (31, 43, 47) zwischen der zweiten Scheibe (2) und der Nabe (3) und/oder zwischen einer Gleitbacke (22) und ihrem Lager (23) eingeschoben ist.

6. Mehrscheibenbremse nach einem der Ansprüche 1 bis 5, dadurch gekennzeichnet, daß das mit der Nabe (3) zusammenhängende Flanschteil (10) Außenumfangslaschen (9, 38) umfaßt, auf denen seitlich Innenumfangslaschen (8) befestigt sind, die mit der ersten Scheibe (1) zusammenhängen, wobei mindestens zwei nach außen hin offene Lager (23) zwischen den Außenumfangslaschen (38) des Flanschteils (10) ausgespart sind, um je eine mit der zweiten Scheibe (2) zusammenhängende Gleitbacke (22) aufzunehmen.

7. Mehrscheibenbremse nach Anspruch 6, dadurch gekennzeichnet, daß die erste und die zweite Scheibe (1, 2) identisch und beim Einbau austauschbar sind und an ihrem Innenumfang Befestigungslaschen (8) aufweisen, die gleichmäßig verteilt und dazu bestimmt sind, zum Beispiel durch Nieten (7) auf den Umfangslaschen (9, 38) des Verbindungsflansches (10) bzw. auf dem Mittelteil (24) einer Bremsbacke (22) befestigt zu werden.

8. Mehrscheibenbremse nach Anspruch 7, dadurch gekennzeichnet, daß jede Gleitbacke (22) ein Mittelteil (24) geringerer Dicke aufweist, das dazu geeignet ist, seitlich an mindestens einer Innenumfangslasche (8) einer Bremsscheibe (1, 2) befestigt zu werden, und Umfangsteile (27) von allgemein zylindrischer Form, die mit dem Mittelteil (24) verbunden und an ihren beiden Enden, an der Seite der hohlen Enden (28) der sie aufnehmenden Lager (23), mit mindestens einer freitragenden Fläche (29) versehen sind, die im Verhältnis zur allgemeinen zylindrischen Form hervorragt und dazu bestimmt ist, sich auf diesem hohlen Ende (28) des Lagers (23) abzustützen.

9. Mehrscheibenbremse nach einem der Ansprüche 1 bis 8, dadurch gekennzeichnet, daß mindestens eine Spielnachstellfeder (31, 43) zwischen einer auf dem Außenumfang des Verbindungsflanschteils (10) vorgesehenen Auflagefläche (32) und einer auf dem Innenumfang der zweiten Scheibe (2) eingerichteten zugeordneten Auflagefläche (33) eingeschoben ist.

10. Mehrscheibenbremse nach Anspruch 9, dadurch gekennzeichnet, daß mindestens eine der Auflageflächen (32, 40; 33, 44), die auf dem Verbindungsflanschteil (10) oder auf dem Innenumfang der zweiten Scheibe (2) vorgesehen ist, in bezug auf eine radiale Richtung so geneigt ist, daß sie eine Reaktion mit Radialkomponente und mit Tangentialkomponente erzeugt.

11. Mehrscheibenbremse nach einem der Ansprüche 9 oder 10, dadurch gekennzeichnet, daß die Nachstellfeder (31, 43) eine zum U gebogene Blattfeder ist, die mit zwei etwa halbzylindrischen Halteösen (42) versehen ist, die senkrecht zum Federblatt umgelegt sind und in Betrieb in etwa halbzylindrischen Lagern (41), auf der Seite einer der Auflageflächen (40) des Flanschteils (10), gelagert sind.

12. Mehrscheibenbremse nach einem der Ansprüche 5 bis 11, dadurch gekennzeichnet, daß die Bremsbacke (22) auf ihrem zum Boden (49) des Lagers (23) hingewandten Teil eine Federauflage- und Leitfläche und ein hohles Federlager (46) aufweist, in das eine Feder (47) für die Spielnachstellung der Bremsbacke angeordnet ist, und die zwischen dieser Auflage- und Leitfläche (Ösen 48) der Feder und einer von der Bodenfläche (49) des Lagers (23) gebildeten Federanschlagfläche eingeschoben ist.

## Claims

1. Multiple disc brake comprising a first rotary disc fixed to a hub connected to a rotating member to be braked and at least one second rotary disc capable of sliding axially relative to the hub and to the first disc, whilst at the same time being made integral in terms of rotation with the first disc, the axes of the hub and of the said discs coinciding with one another, and a set of friction blocks having friction linings capable of being laid against the faces of the discs by means of an actuating device, characterized in that the connection between the second disc (2) and the hub (3) is made by means of at least two axially sliding shoes (22) which are uniformly distributed over a circle and which are each accommodated in an axial receptacle (23) of a cross-section matching that of the shoe, in that the shoes (22) are fixed to the inner periphery of the second disc (2) and/or to the outer periphery of a flange part (10), itself fixed to the hub (3), and in that the axial receptacles (23) are conversely provided on the outer periphery of the flange part (10) fixed to the hub and/or on the inner periphery of the second disc (2).

2. Multiple disc brake according to claim 1, characterized in that the axial receptacles (23) have, on the one hand, lateral stop flanks (28) for transmitting the retaining torque of the second disc (2) to the hub (3) and, on the other hand, at least one means (30) of the radial retention of the shoes.

3. Multiple disc brake according to claim 2, characterized in that the means of radial retention consists of one edge (30) of the lateral flank (28) which projects into the receptacle and which closes over the corresponding shoe (22), in order to retain it at least in one of its radial directions of movement.

4. Multiple disc brake according to either of claims 2 or 3, characterized in that each shoe (22) has at least one convex rounded end (27, 29) which interacts with a corresponding concave rounded lateral flank (28) of the receptacle (23), the outer edge (30) of this concave lateral flank (28) closing over the convex end (27) of the shoe (22), in order to trap the latter radially in the receptacle (23), with a tangential play allowing it to execute small radial and rotational movements and axial sliding to bring the friction tracks of the second disc (2) in contact with the corresponding friction linings (16).

5. Multiple disc brake according to any of claims 1 to 4, characterized in that at least one play-compensating spring (31, 43, 47) is interposed between the second disc (2) and the hub (3) and/or between a sliding shoe (22) and its receptacle (23).

6. Multiple disc brake according to any of claims 1 to 5, characterized in that the flange part (10) fixed to the hub (3) has outer peripheral tongues (9, 38), to which inner peripheral tongues (8) integral with the first disc (1) are fastened laterally, at least two outwardly open receptacles (23) being formed between the outer peripheral tongues (38) of the flange part (10), so that each receives a sliding shoe (22) fixed to the second disc (2).

7. Multiple disc brake according to claim 6, characterized in that the first and second discs (1, 2) are identical and interchangeable at assembly and on their inner periphery have fastening tongues (8) uniformly distributed and intended to be fastened, for example by means of rivets (7), to the peripheral tongues (9, 38) of the connecting flange (10) or to the central part (24) of a shoe (22) respectively.

8. Multiple disc brake according to claim 7, characterized in that each sliding shoe (22) has a central part (24) of less thickness, designed to be fastened laterally to at least one inner peripheral tongue (8) of a brake disc (1, 2), and peripheral parts (27) of general cylindrical shape, which are connected to the central part (24) and which are equipped at their two ends, on the same side as the recessed ends (28) of the receptacles (23) receiving them, with at least one bearing surface (29) projecting relative to the general cylindrical shape and intended to come up against the said recessed end (28) of the receptacle (23).

9. Multiple disc brake according to any of claims 1 to 8, characterized in that at least one play-compensating spring (31, 43) is interposed between a supporting surface (32) provided on the outer periphery of the connecting flange part (10) and a matching supporting surface (33) formed on the inner periphery of the second disc (2).

10. Multiple disc brake according to claim 9, characterized in that at least one of the supporting surfaces (32, 40; 33, 44) provided on the connecting flange part (10) or on the inner periphery of the second disc (2) is inclined relative to a radial direction, so as to produce a reaction with a radial component and with a tangential component.

11. Multiple disc brake according to either of claims 9 or 10, characterized in that the compensating spring (31, 43) is a leaf spring bent in the form of a U and equipped with two substantially semi-cylindrical retaining lugs (42) turned down perpendicularly to the spring leaf and accommodated, during operation, in substantially semi-cylindrical receptacles (41) formed on the side of one of the supporting surfaces (40) of the flange part (10).

12. Multiple disc brake according to any of claims 5 to 11, characterized in that the shoe (22) has, in its part facing the bottom (49) of the receptacle (23), a surface for supporting and guiding the spring and a recessed spring receptacle (46), in which a play-compensating spring (47) of the shoe is arranged and which is interposed between the said surface for supporting and guiding the spring (lugs 48) and a spring stop surface formed by the bottom surface (49) of the receptacle (23).

FIG.1

FIG.2

FIG.3

FIG.4

EP 0 266 260 B1

FIG.6

FIG.7

FIG.5